**Europäisches Patentamt**

**European Patent Office**

**Office européen des brevets**

(19)

(11) Veröffentlichungsnummer: **0 167 962 B1**

(12) **EUROPÄISCHE PATENTSCHRIFT**

(45) Veröffentlichungstag der Patentschrift:
**27.09.89**

(51) Int. Cl.⁴: **C 08 G 63/50, C 08 G 63/20, C 08 G 63/66**

(21) Anmeldenummer: **85108157.0**

(22) Anmeldetag: **01.07.85**

(54) **Ungesättigte Polyester.**

(30) Priorität: **09.07.84 DE 3425183**

(43) Veröffentlichungstag der Anmeldung:
**15.01.86 Patentblatt 86/3**

(45) Bekanntmachung des Hinweises auf die Patenterteilung:
**27.09.89 Patentblatt 89/39**

(84) Benannte Vertragsstaaten:
**AT BE CH DE FR GB LI NL**

(56) Entgegenhaltungen:
**EP-A- 0 063 292**
**EP-A- 0 113 801**
**US-A- 4 035 320**
**US-A- 4 049 599**

(73) Patentinhaber: **Henkel Kommanditgesellschaft auf Aktien, Postfach 1100 Henkelstrasse 67, D-4000 Düsseldorf-Holthausen (DE)**

(72) Erfinder: **Fischer, Herbert, Dr., Am Nettchesfeld 14, D-4000 Düsseldorf 13 (DE)**
Erfinder: **Wegemund, Bernd, Dr., Händelweg 3, D-5657 Haan 1 (DE)**
Erfinder: **Gorzinski, Manfred, Bogenstrasse 6, D-4000 Düsseldorf (DE)**
Erfinder: **Gress, Wolfgang, Westfalenweg 247, D-5600 Wuppertal-Elberfeld (DE)**

## Beschreibung

Die Erfindung betrifft einen lufttrocknenden ungesättigten Polyester, der sich aufgrund seiner geringen Viskosität zu lösungsmittelfreien oder zumindest äusserst lösungsmittelarmen Lackbindemitteln verarbeiten lässt.

Lacke werden üblicherweise in Spritz-, Streich- oder Tauchverfahren aufgebracht. Dabei darf eine gewisse Viskosität nicht überstiegen werden, um guten Verlauf und vollständige Benetzung zu gewährleisten. Üblicherweise stellt der Fachmann die richtige Viskosität durch Zugabe von Lösungs- oder Verdünnungsmitteln ein. Lösungs- und Verdünnungsmittel werden jedoch bei der Verarbeitung als störend empfunden und belasten die Umwelt, so dass es nicht an Versuchen gefehlt hat, sie zumindest der Menge nach zu begrenzen. Auf dem Teilgebiet der ofentrocknenden Lacke wird beispielsweise in der deutschen Offenlegungsschrift 2 505 246 vorgeschlagen, einen Teil des Lösungsmittels durch einen zur Kondensation befähigten Bestandteil nämlich Caprolactam zu ersetzen. Das US-Patent 4 049 599 schlägt ebenfalls für ofentrocknende Lacke einen niedrig viskosen und relativ niedermolekularen Polyester auf Basis von Fettsäuren, Polyolen und mehrfunktionellen Carbonsäuren vor.

Die beiden genannten Lösungswege konnten bisher auf lufttrocknende Systeme nicht übertragen werden. Die Lufttrocknung von Alkydharzen ist eine vergleichsweise langsame Vernetzungsreaktion, die um so schneller zu harten Überzügen führt, je höher das Ausgangsmolekulargewicht des Harzes ist. Mit steigendem Molekulargewicht steigt aber auch die Viskosität der Harzlösungen und daher die Menge an benötigtem Lösungsmittel/Verdünnungsmittel um verarbeitbare Zubereitungen zu erhalten.

Die Erfinder haben sich die Aufgabe gestellt, an diesem Punkt Abhilfe zu schaffen und einen hochverzweigten hochungesättigten Polyester mit niederer Viskosität zur Verfügung zu stellen, der die für ein lufttrocknendes Alkydharz zu fordernden Trocknungsgeschwindigkeiten aufweist. Eine weitere Aufgabe der Erfindung betrifft ein Herstellverfahren für derartige Polyester sowie auch ihre Verwendung in lufttrocknenden «Highsolid»- beziehungsweise «Full-solid»-Lacken.

Gegenstand des Patents sind somit ungesättigte, niedrigviskose mit monofunktionellen Alkoholen modifizierte Polyester, die dadurch gekennzeichnet sind, dass man sie nach einem Verfahren herstellt, bei dem man Di- und/oder Tricarbonsäuren oder deren reaktive Derivate mit den olefinisch ungesättigten monofunktionellen Alkoholen zu Partialestern mit einer freien Carboxylgruppe umsetzt und anschliessend die Partialester mit einem Polyol der Funktionalität grösser 2 kondensiert.

Die erfindungsgemässen Polyester sind stark verzweigt, sie weisen vorzugsweise einen sternförmigen Molekülaufbau auf. Dabei entstammt der zentrale Molekülteil einem Polyol mit mehr als 2 und im Mittel weniger als 25, vorzugsweise weniger als 10 und insbesondere weniger als 6 OH-Gruppen. An die einzelnen OH-Gruppen des Polyols sind über mehrfunktionelle Carbonsäuren ungesättigte monofunktionelle Alkohole gebunden. Setzt man als mehrfunktionelle Carbonsäuren Dicarbonsäuren ein, so kann bis zu ein ungesättigter monofunktioneller Alkohol pro Hydroxylgruppe des Polyols in das Polyestermolekül eingeführt werden. Bei der Verwendung von Tricarbonsäuren ist es möglich bis zu 2 mol ungesättigter monofunktioneller Alkohol pro Hydroxylgruppe des Polyols einzubauen.

Eine weitere Ausführungsform der Erfindung betrifft verzweigte ungesättigte Polyester, bei denen eine oder mehrere Hydroxylgruppen des zentralen Polyols nicht umgesetzt wird. In diesem Falle sollen jedoch mindestens drei ungesättigte Alkoholreste im Mittel pro Molekül Polyester vorhanden sein, da ansonsten sich die Trocknungszeiten des Lackbindemittels verlängern.

Erfindungsgemäss ist es auch möglich, zwei oder mehrere derartiger sternförmiger Polyestermoleküle über Di- oder Tricarbonsäurebrücken aneinander zu kondensieren. Der Fachmann wird jedoch nicht mehr als fünf und insbesondere nicht mehr als zehn Polyestermoleküle miteinander verbinden, da ansonsten höher viskose Harze entstehen.

Aus diesen Ausführungen zur Molekülstruktur ergibt sich für die Praxis, dass pro mol OH-Gruppen des zentralen Polyols 0,7 bis 1 mol Dicarbonsäuren oder Tricarbonsäuren eingesetzt werden sollen, wobei 0,8 bis 1 mol bevorzugt sind. Die Menge an ungesättigten monofunktionellen Alkoholen soll so gewählt werden, dass zumindest 80%, vorzugsweise aber 90 bis 100% der nicht an das zentrale Polyol gebundenen Carbonsäuregruppen damit verestert werden können.

Als zentrale Polyole können eine Vielzahl von Verbindungen eingesetzt werden. Voraussetzung ist lediglich, dass mindestens 3 Hydroxylgruppen vorhanden sind. Besonders geeignet sind Polyole mit 3 bis 6 Hydroxylgruppen und bis zu 6 C-Atomen. So können beispielsweise Glycerin, Trimethylolethan, Trimethylolpropan, Pentaerythrit oder Sorbit eingesetzt werden. Eine weitere Gruppe geeigneter Polyole sind die Kondensationsprodukte der vorgenannten Polyole mit sich selbst, die insgesamt bis zu 18 C-Atomen und bis zu 3 Ethersauerstoffatome aufweisen. So sind beispielsweise Kondensationsprodukte des Glycerins (Diglycerin, Triglycerin) des Trimethylolethans, des Trimethylolpropans und/oder des Pentaerythrits mit jeweils 2 oder 3 Ethersauerstoffatomen geeignet.

In einer Reihe von Fällen hat es sich als günstig erwiesen, die Polyole einer Kettenverlängerungsreaktion zu unterziehen. Dazu werden die Verbindungen mit bis zu 2 mol Ethylenoxid und/oder vorzugsweise Propylenoxid pro mol Hydroxylgruppen zur Reaktion gebracht. Eine weitere Gruppe geeigneter mehrfunktioneller Alkohole sind die Zuckeralkohole wie etwa Sorbit oder Mannit. Geeignet sind ferner deren Kondensationsprodukte unter innerer Wasserabspaltung, so zum Beispiel Sorbitan. Schliesslich können durch Telomerisation gewonnene kurzkettige Oligomere als Polyole eingesetzt werden. Beispielsweise Polyvinylalkohol mit niederem Molekulargewicht.

Zur Verbindung der Polyole mit den ungesättigten monofunktionellen Alkoholen werden erfindungsgemäss Di- und Tricarbonsäuren eingesetzt. Hier sind ungesättigte aliphatische und/oder cycloaliphatische Di- und/oder Tricarbonsäuren mit 4 bis 10 C-Atomen bevorzugt. So können beispielsweise Maleinsäure, Fumarsäure, Tetrahydrophthalsäure und/oder substituierte Tetrahydrophthalsäuren, z.B. Methyltetrahydrophthalsäure und/oder Itaconsäure eingesetzt werden. Bevorzugt sind in jedem Falle Säuren, die cyclische Anhydride bilden, da vorzugsweise anstelle der Säuren deren reaktive Derivate wie beispielsweise Anhydride, Ester oder Säurechloride eingesetzt werden. Anstelle ungesättigter Di- und/oder Tricarbonsäuren können auch gesättigte aliphatische und/oder cycloaliphatische Di- und/oder Tricarbonsäuren mit 3 bis 10 C-Atomen eingesetzt werden. So können Glutarsäure, Bernsteinsäure, Adipinsäure, Sebacinsäure, Hexahydrophthalsäure und deren Isomere oder auch Zitronensäure oder Cyclohexantricarbonsäure eingesetzt werden. Es versteht sich, dass auch hier anstelle der Säuren die reaktiven Derivate verwendet werden können. Dies gilt auch für die aromatischen Di- und/oder Tricarbonsäuren mit 8 bis 14 C-Atomen, die ebenfalls erfindungsgemäss verwendet werden können. Geeignete aromatische Di- und/oder Tricarbonsäuren sind neben den isomeren Phthalsäuren auch Trimellitsäuren. So ist Trimellitsäureanhydrid ein besonders günstiger Rohstoff. Sollen besonders kurze Trockenzeiten erzielt werden, so werden in erster Linie ungesättigte Di- und/oder Tricarbonsäuren verwendet. Werden Produkte mit längerer Trockenzeit angestrebt, empfehlen sich die gesättigten Verbindungen. Dabei ergibt die Verwendung aromatischer Säuren ein grössere Endhärte der Lacke.

Über die genannten mehrfunktionellen Carbonsäuren werden erfindungsgemäss ungesättigte monofunktionelle Alkohole an die zentralen Polyole gebunden. Als monofunktionelle Alkohole sind sowohl lineare wie auch verzweigte primäre Alkohole geeignet. Diese weisen vorzugsweise 12 bis 22 C-Atome auf und insbesondere 16 bis 18 C-Atome. Eine besonders bevorzugte Klasse von monofunktionellen und gesättigten Alkoholen sind ungesättigte Fettalkoholgemische. Fettalkohole sind die Hydrierungsprodukte von natürlich vorkommenden Fettsäuren. Es handelt sich um primäre monofunktionelle Alkohole mit gerader Anzahl an C-Atomen, die die in der Ausgangsfettsäure vorhandenen Doppelbindungen enthalten. Ungesättigte Fettalkohole werden aus Fettsäuremischungen hergestellt, die teilweise oder überwiegend aus Fettsäuren mit 14, 16, 18, 20 oder 22 C-Atomen und einer bis 3 Doppelbindungen bestehen. Im Sinne der Erfindung besonders bevorzugte Fettalkoholgemische weisen eine mittlere Jodzahl zwischen 90 und 200, vorzugsweise zwischen 130 und 180 und insbesondere zwischen 150 und 170 auf. Wichtige Bestandteile derartiger ungesättigter Fettalkohole sind Oleylalkohol, Linoleylalkohol, Erucaalkohol und Palmitoleylalkohol.

Zur Herstellung der erfindungsgemässen ungesättigten Polyester geht man am besten von den Di- und/oder Tricarbonsäuren, ihren Estern, und vorzugsweise ihren Anhydriden aus und setzt diese in einer ersten Reaktionsstufe in an sich bekannter Weise mit den ungesättigten monofunktionellen Alkoholen zu Partialestern um. Die Partialester werden dann in einer zweiten Stufe mit den Polyolen verestert. Dabei können saure Katalysatoren und/oder Blei- oder Zinnsalze oder andere übliche Veresterungskatalysatoren zugegen sein, es kann mit einem schwerflüchtigen Lösungsmittel wie Toluol oder Xylol gearbeitet werden, das zum azeotropen Ausgreifen des Wassers dient oder es kann als Reaktionswasser im Stickstoffstrom entfernt werden.

Möglich, jedoch weniger bevorzugt, ist es auch von den Polyolen auszugehen und diese mit den Anhydriden der Dicarbonsäure oder beispielsweise auch mit Trimelitsäureanhydrid zu mehrfunktionellen Carbonsäuren umzusetzen, die dann ihrerseits mit den ungesättigten monofunktionellen Alkoholen verestert werden.

Nach einer bevorzugten Ausführungsform der Erfindung werden die Di- und/oder Tricarbonsäuren in der Weise mit den ungesättigten monofunktionellen Alkoholen umgesetzt, dass pro Molekül noch ein Carboxylgruppe vorhanden ist. Die so hergestellten Halbester werden vorzugsweise stöchiometrisch mit den Polyolen verestert. Will man 2 oder mehrere ungesättigte Polyestermoleküle über eine Dicarbonsäure verbrücken, so empfiehlt es sich, ein Vorprodukt herzustellen, bei dem eine Hydroxylgruppe des mit dem Halbester umgesetzten Polyols noch frei ist und dieses Vorprodukt durch Veresterung mit einer Dicarbonsäure im Molverhältnis 2:1 zu dimerisieren. Im Rahmen der Erfindung ist es auch möglich, durch einen geringen Überschuss an Polyol ungesättigte Polyester mit einem Restüberschuss an Hydroxylgruppen herzustellen oder durch einen Unterschuss an monofunktionellen Alkoholen, Produkte mit restlichen Carboxylgruppen zu erzeugen.

Die erfindungsgemässen ungesättigten Polyester können zur Herstellung von lufttrocknenden Alkydharzlacken verwendet werden. Dazu werden sie mit den üblichen, dem Alkydharzfachmann bekannten Hilfsmitteln, wie Sikkativen, Füllstoffen, Pigmenten, Hautverhinderungsmitteln, Pigmentdispergatoren und ähnlichem versetzt.

Mit den erfindungsgemässen ungesättigten Polyestern hergestellten Lacken sind ohne Verdünnung mit organischen Lösungsmitteln so niedrig viskos, dass sie bereits verarbeitet werden können. Für manche Anwendung ist jedoch eine weitere Senkung der Viskosität wünschenswert, wobei sich ein Zusatz von 5 bis 10 Gewichtsprozent an üblichen Lösungsmitteln oder Lösungsmittelgemischen empfiehlt. Nur in Einzelfällen sind Lösungsmittelmengen bis 25 Gewichtsprozent vonnöten. Dabei steht es dem Fachmann selbstverständlich frei, noch höhere Lösungsmittelmengen einzusetzen. Jedoch ist darin kein Vorteil zu erkennen.

### Beispiel 1

In einer 2 l Laborapparatur mit Rührer, Kühler, Wasserabscheider und Thermometer wurden die folgenden Substanzen zur Reaktion gebracht:
504 g HD-Ocenol® (ungesättigter Fettalkohol, C 16–18, Jodzahl 150 bis 170, OH-Zahl 223)
304 g Tetrahydrophthalsäureanhydrid
100 ml Xylol (zum Entfernen des Reaktionswassers)

Man liess 3 Stunden bei 110 bis 120° reagieren und fügte anschliessend 125 g Ditrimethylolpropan und 2,8 g Zinnpulver hinzu. Das Lösungsmittel wurde abdestilliert und von nun an Reaktionswasser im Stickstoffstrom ausgetragen. Dazu wurde auf eine Temperatur von ca. 240°C maximal erhitzt und kondensiert bis 38 ml Kondensat entstanden war. Die Säurezahl war unter 5 gefallen. Erhalten wurden ca. 1 kg eines niedrig viskosen ungesättigten Polyesters.

### Beispiel 2

Beispiel 1 wurde wiederholt, jedoch wurde anstelle von 150 g Ditrimethylolpropan 105,4 g Dipentaerythrit verwendet.

### Beispiel 3

Die Harze aus Beispiel 1 und 2 wurden zu Klarlacken verarbeitet. Dazu wurden unter Rühren gemischt:
50 g Harz
0,2 g Trocknungsbeschleuniger (organisches Kobalt-Salz 6 Gewichtsprozent Kobalt, Hersteller: Firma Borchers, Goslar)
1,25 g Trocknungsbeschleuniger (organisches Zirkonium-Salz 6 Gewichtsprozent Zr, Hersteller: Firma Borchers, Goslar)
1,0 g Hautverhinderungsmittel (Dehydril® NRC [Henkel])

### Beispiel 4

Der ungesättigte Polyester aus Beispiel 1 wurde zu einem Weisslack verarbeitet. Dazu wurde zunächst eine Mahlpaste hergestellt aus:
20 g ungesättigter Polyester aus Beispiel 1
0,5 g Trocknungsbeschleuniger (4 Gewichtsprozent «Calcium» [Calciumdiethylhexanoat], Firma Borchers, Goslar)
40 g Titandioxid (Kronos® CL 310)
Die genannten Bestandteile wurden 5 Minuten bei 15 bis 20000 Umdrehungen pro Minute in einem Dispergiergerät vermahlen. Zum Auflakken wurden hinzugefügt:
30 g ungesättigter Polyester
0,2 g Trocknungsbeschleuniger auf Basis Co wie unter Beispiel 4 1,25 g Trocknungsbeschleuniger auf Basis Zr wie unter Beispiel 4
1,0 g Hautverhinderungsmittel Dehydril NRC

### Beispiel 5

Zum Test des Trocknungsverhaltens wurden Lackfilme auf Glasplatten gezogen und Pendelhärten nach König (DIN 53 157) gemessen. In allen Fällen war der Glanz (Winkel 60°) grösser als 90%.

| Lack | Pendelhärten nach König DIN 53 157 gemessen nach | | |
|---|---|---|---|
| | 1 Tag | 7 Tagen | 14 Tagen |
| Klarlack (Harz aus Beisp. 1) | 14 | 22 | 60 |
| Klarlack (Harz aus Beisp. 2) | 11 | 38 | 62 |
| Weisslack (Harz aus Beisp. 1) | 14 | 39 | 70 |

### Patentansprüche

1. Ungesättigte, niedrigviskose mit monofunktionellen Alkoholen modifizierte Polyester, dadurch gekennzeichnet, dass man sie nach einem Verfahren herstellt, bei dem man Di- und/oder Tricarbonsäuren oder deren reaktive Derivate mit den olefinisch ungesättigten monofunktionellen Alkoholen zu Partialestern mit einer freien Carboxylgruppe umsetzt und anschliessend die Partialester mit einem Polyol der Funktionalität grösser 2 kondensiert.

2. Ungesättigte Polyester nach Anspruch 1, dadurch gekennzeichnet, dass sie pro mol OH-Gruppen des Polyols 0,75 bis 1,0 mol Dicarbonsäuren und/oder Tricarbonsäuren enthalten.

3. Ungesättigte Polyester nach den Ansprüchen 1 und 2, dadurch gekennzeichnet, dass sie als zentralen Molekülteil ein Polyol mit mehr als 2 und im Mittel weniger als 25, vorzugsweise weniger als 10 und insbesondere bis 6 OH-Gruppen aufweisen.

4. Ungesättigte Polyester nach den Ansprüchen 1–3, dadurch gekennzeichnet, dass sie Polyole der Funktionalität 3 bis 6 mit bis zu 6 C-Atomen, deren Kondensationsprodukte mit sich selbst mit bis zu 18 C-Atomen und bis zu 3 Ethersauerstoffatomen und/oder Umsetzungsprodukte der Polyole oder ihrer Kondensationsprodukte mit bis zu 2 mol Ethylenoxid und/oder Propylenoxid pro mol OH-Gruppe enthalten.

5. Ungesättigte Polyester nach den Ansprüchen 1–4, dadurch gekennzeichnet, dass sie als Polyolkomponente einkondensiert Diglycerin, Triglycerin, Ditrimethylolpropan, Ditrimethylolethan und/oder Dipentaerythrit enthalten.

6. Ungesättigte Polyester nach den Ansprüchen 1–5, dadurch gekennzeichnet, dass sie als Di- oder Tricarbonsäuren ungesättigte aliphatische oder cycloaliphatische Di- und/oder Tricarbonsäuren mit 4 bis 10 C-Atomen, gesättigte aliphatische und/oder cycloaliphatische Di- und/oder Tricarbonsäuren mit 3 bis 10 C-Atomen und/oder aromatische Di- oder Tricarbonsäuren mit 8 bis 14 C-Atomen enthalten.

7. Ungesättigte Polyester nach den Ansprüchen 1-6, dadurch gekennzeichnet, dass sie als Dicarbonsäure Maleinsäure, Tetrahydrophthalsäure, Methyltetrahydrophthalsäure, Phthalsäure, Hexahydrophthalsäure, Itaconsäure und/oder Glutarsäure enthalten.

8. Ungesättigte Polyester nach den Ansprüchen 1-7, dadurch gekennzeichnet, dass sie als ungesättigte monofunktionelle Alkohole lineare oder verzweigte primäre Alkohole mit 12 bis 22 C-Atomen, vorzugsweise 16 bis 18 C-Atomen enthalten.

9. Ungesättigte Polyester nach den Ansprüchen 1-8, dadurch gekennzeichnet, dass sie als ungesättigte monofunktionelle Alkohole, ungesättigte Fettalkoholgemische der Jodzahl 90 bis 200, vorzugsweise 130 bis 180 und insbesondere 150 bis 170 enthalten.

10. Verfahren zur Herstellung ungesättigter Polyester nach den Ansprüchen 1-9, dadurch gekennzeichnet, dass man Di- und/oder Tricarbonsäuren beziehungweise deren reaktive Derivate mit den monofunktionellen ungesättigten Alkoholen zu Partialestern mit einer freien Carboxylgruppe umsetzt und anschliessend die Partialester mit dem Polyol kondensiert.

11. Verwendung der ungesättigten Polyester nach den Ansprüchen 1-9 zusammen mit üblichen Hilfsstoffen wie Trocknungsbeschleunigern, Hautverhinderungsmitteln, Pigmenten, Pigmentdispergatoren und gewünschtenfalls bis zu 25 Gewichtsprozent organischen Lösungsmitteln und/oder Reaktivverdünnern als lufttrocknende Lackbindemittel.

## Claims

1. Unsaturated, low-viscosity polyesters modified by monohydric alcohols, characterized in that they are produced by a process in which di- and/or tricaroboxylic acids or reactive derivatives thereof are condensed with the olefinically unsaturated monofunctional alcohols to form partial esters containing a free carboxyl group which are the condensed with a polyol having a functionality of more than 2.

2. Unsaturated polyesters as claimed in claim 1, characterized in that they contain from 0.75 to 1 mole of dicarboxylic acids and/or tricarboxylic acids per mole of OH groups of the polyol.

3. Unsaturated polyesters as claimed in claims 1 and 2, characterized in that they contain a polyol bearing more than 2 and, on average, less than 25, preferably less than 10 and more preferably up to 6 OH groups as the central part of the molecule.

4. Unsaturated polyesters as claimed in claims 1 to 3, characterized in that they contain polyols having a functionality of from 3 to 6 and containing up to 6 carbon atoms, of which the self-condensation products contain up to 18 carbon atoms and up to 3 ether oxygen atoms, and/or reaction products of the polyols or their condensation products with up to 2 moles of ethylene oxide and/or propylene oxide per mole of OH groups.

5. Unsaturated polyesters as claimed in claims 1 to 4, characterized in that they contain diglycerol, triglycerol, ditrimethylol propane, ditrimethylol ethane and/or dipentaerythritol in co-condensed form as the polyol component.

6. Unsaturated polyesters as claimed in claims 1 to 5, characterized in that they contain as di- or tricarboxylic acids unsaturated aliphatic or cycloaliphatic di- and/or tricarboxylic acids containing from 4 to 10 carbon atoms, saturated aliphatic and/or cycloaliphatic di- and/or tricarboxylic acids containing from 3 to 10 carbon atoms and/or aromatic di- or tricarboxylic acids containing from 6 to 14 carbon atoms.

7. Unsaturated polyesters as claimed in claims 1 to 6, characterized in that they contain as dicarboxylic acid maleic acid, tetrahydrophthalic acid, methyl tetrahydrophthalic acid, phthalic acid, hexahydrophthalic acid, itaconic acid and/or glutaric acid.

8. Unsaturated polyesters as claimed in claims 1 to 7, characterized in that they contain linear or branched primary alcohols containing from 12 to 22 carbon atoms and preferably from 16 to 18 carbon atoms as the unsaturated monohydric alcohols.

9. Unsaturated polyesters as claimed in claims 1 to 8, characterized in that they contain unsaturated fatty alcohol mixtures having an iodine number of from 90 to 200, preferably form 130 to 180 and more preferably from 150 to 170 as the unsaturated monohydric alcohols.

10. A process for producing the unsaturated polyesters claimed in claims 1 to 9, characterized in that di- and/or tricaroboxylic acids or reactive derivatives thereof are reacted with the monohydric unsaturated alcohols to form partial esters containing a free carboxyl group, after which the partial esters are condensed with the polyol.

11. The use of the unsaturated polyesters claimed in claims 1 to 9 together with standard auxiliaries, such as drying accelerators, anti-skinning agents, pigments, pigment dispersants and, optionally, up to 25% by weight of organic solvents and/or reactive diluents as air-drying lacquer binders.

## Revendications

1. Polyesters insaturés à faible viscosité modifiés par des alcools monofonctionnels, caractérisés en ce qu'on les produit suivant un procédé dans lequel on fait réagir des acides di- et/ou tricarboxyliques ou leurs dérivés réactifs avec les alcools oléfiniques insaturés monofonctionnels pour obtenir des esters partiels avec un groupe carboxyle libre et qu'on condense ensuite les esters partiels avec un polyol dont la fonctionnalité est supérieure à 2.

2. Polyesters insaturés selon la revendication 1, caractérisés en ce que ceux-ci contiennent, par mole de groupes OH du polyol, 0,75 à 1 mole d'acide dicarboxylique et/ou d'acide tricarboxylique.

3. Polyesters insaturés selon les revendication 1 et 2, caractérisés en ce que ceux-ci contiennent comme partie centrale de la molécule un polyol présentant plus de 2 groupes OH et, en moyenne, moins de 25 groupes OH et, de préférence moins de 10 et plus particulièrement moins de 6 groupes OH.

4. Polyesters insaturés selon les revendications 1 à 3, caractérisés en ce que ceux-ci contiennent des polyols dont la fonctionnalité est de 3 à 6 avec jusqu'à 6 atomes de carbone, dont les produits de condensation avec eux-mêmes contiennent jusqu'à 18 atomes de carbone et jusqu'à 3 atomes d'oxygène d'éthérification et/ou des produits de réaction des polyols ou de leurs produits de condensation avec jusqu'à 2 moles d'oxyde d'éthylène et/ou d'oxyde de propylène pour chaque mole de groupe OH.

5. Polyesters insaturés selon les revendications 1 à 4, caractérisés en ce que ceux-ci contiennent comme composants de polyol de la diglycérine, de la triglycérine, du ditriméthylolpropane, du ditriméthyloléthane et/ou de la dipentaérythrite condensées.

6. Polyesters insaturés selon les revendications 1 à 5, caractérisés en ce que ceux-ci contiennent comme acides di- ou tricarboxyliques des acides di- et/ou tricarboxyliques aliphatiques ou cycloaliphatiques à 4 à 10 atomes de carbone, des acides di- et/ou tricarboxyliques aliphatiques et/ou cycloaliphatiques saturés à 3 à 10 atomes de carbone et/ou des acides di- ou tricarboxyliques aromatiques à 8 à 14 atomes de carbone.

7. Polyesters insaturés selon les revendications 1 à 6, caractérisés en ce que ceux-ci contiennent comme acides dicarboxyliques de l'acide maléique, de l'acide tétrahydrophtalique, de l'acide méthyltétrahydrophtalique, de l'acide phtalique, de l'acide hexahydrophtalique, de l'acide itaconique et/ou de l'acide glutarique.

8. Polyesters insaturés selon les revendications 1 à 7, caractérisés en ce que ceux-ci contiennent comme alcools monofonctionnels insaturés des alcools linéaires ou ramifiés primaires à 12 à 22 atomes de carbone et, de préférence, à 16 à 18 atomes de carbone.

9. Polyesters insaturés selon les revendications 1 à 8, caractérisés en ce que ceux-ci contiennent comme alcools monofonctionnels insaturés des mélanges d'alcools gras insaturés dont l'indice d'iode est compris entre 90 et 200 et, de préférence, entre 130 et 180 et, plus particulièrement, entre 150 et 170.

10. Procédé de production de polyesters insaturés selon les revendications 1 à 9, caractérisés en ce que l'on fait réagir des acides di- et/ou tricarboxyliques ou leurs dérivés réactifs avec les alcools insaturés monofonctionnels pour obtenir des esters partiels avec un groupe carboxylique libre et que l'on condense ensuite les esters partiels avec le polyol.

11. Utilisation des polyesters insaturés selon les revendications 1 à 9, avec des substances auxiliaires usuelles telles que accélérateurs de séchage, agents empêchant la formation de peaux, pigments, dispersants pour pigments et, si cela est souhaitable, jusqu'à 25% en poids de solvants organiques et/ou de diluants réactifs servant de liants pour vernis séchant à l'air.